Europäisches Patentamt

European Patent Office

Office européen des brevets

(11) Publication number: **0 400 778 B1**

## EUROPEAN PATENT SPECIFICATION

(45) Date of publication of patent specification: **02.11.94** (51) Int. Cl.5: **C04B 35/00**

(21) Application number: **90302476.8**

(22) Date of filing: **08.03.90**

(54) **Reversible polymer gel binders for powder forming.**

(30) Priority: **30.05.89 US 358571**

(43) Date of publication of application:
**05.12.90 Bulletin 90/49**

(45) Publication of the grant of the patent:
**02.11.94 Bulletin 94/44**

(84) Designated Contracting States:
**BE DE FR GB IT SE**

(56) References cited:
**EP-A- 0 074 274**
**US-A- 3 772 234**
**US-A- 4 265 794**
**US-A- 4 267 086**

**CHEMICAL ABSTRACTS vol. 107, no. 26, De-cember 1987, page 298, abstract no. 241464n, Columbus, Ohio, US; & JP - A - 62197166**

**TRANSACTIONS AND JOURNAL OF THE BRITISH CERAMIC SOCIETY vol. 86, no. 1, February 1987, pages 18-22, Stoke-on-Trent, GB; M.J. EDIRISINGHE et al.: "Rheology of Ceramic Injection Moulding Formulations"**

(73) Proprietor: **Corning Incorporated**
**Houghton Park**
**Corning New York 14831 (US)**

(72) Inventor: **Johnson, Ronald Edgar**
**South Main Street**
**Tioga, Pennsylvania (US)**
Inventor: **News, Jean Marie**
**104 W. Pulteney Street,**
**Apt. 7A-Oneida Bldg.**
**Corning, New York 14831 (US)**

(74) Representative: **Smith, Sydney et al**
**Elkington and Fife**
**Prospect House**
**8 Pembroke Road**
**Sevenoaks, Kent TN13 1XR (GB)**

TRANSACTIONS AND JOURNAL OF THE BRITISH CERAMIC SOCIETY vol. 87, no. 1, February 1988, pages 22-26, Stoke-on-Trent, GB; M.S. THOMAS et al.: "Non-Uniform Shrinkage in Ceramic Injection-Moulding"

CHEMICAL ABSTRACTS vol. 108, no. 22, May 1988, page 305, abstract no. 191546p, Columbus, Ohio, US; & JP - A - 6311562

CHEMICAL ABSTRACTS vol. 110, no. 4, January 1989, page 275, abstract no. 28161s, Columbus, Ohio, US; & JP - A - 63176373

## Description

The present invention relates to the manufacture of articles from sinterable powders by forming processes such as injection molding, extrusion, or the like. More particularly, the invention relates to thermoplastic binder formulations for the manufacture of ceramic or other inorganic products, which binders exhibit reversible gelling behavior in combination with desirable binder burnout characteristics.

Binders useful for the manufacture of products from powdered starting materials, e.g., from particulate ceramic materials, must meet a number of requirements. For example, the binder must be compatible with the ceramic material such that a flowable dispersion comprising a relatively high loading of the ceramic material in the binder may be provided. In addition, the "green" preform produced by shaping the dispersion of ceramic powder in the binder should have reasonable strength such that it can be handled.

For desirable binder "burnout" or dewaxing performance, the binder should be removable from the shaped ceramic part without incurring distortion or breakage of the part. And, the binder-free preform should have at least a minimum level of strength, yet be sufficiently free of binder residues that defect-free consolidation is readily achievable.

The formulation of binders meeting these requirements is complex and a large number of different binder formulations have been proposed in the prior art. U. S. Patent No. 4,201,594, for example, discloses binders of liquid type which are useful to make slurries of ceramic powders which will gel in a forming mold. The gels thus provided are irreversible, and are intended to improve shape retention in the formed part.

Thermoplastic or heat-softening binder compositions comprising combinations of thermoplastic polymer and oil or wax additives are also known, these compositions taking the form of meltable solids. U. S. Patent No. 4,568,502 discloses binder formulations of this type, the disclosed compositions consisting of mixtures of thermoplastic block copolymers, oils, waxes, and a stiffening polymer component which enhances the rigidity of green ceramic preforms containing the binder.

U. S. Patent No. 4,404,166 discloses a binder system comprising two wax components, each component exhibiting a different melting or vaporization behavior. Advantageously, the lower melting point wax can be volatilized from a green ceramic preform comprising the binder while the higher melting point component remains in place to support the preform and help to prevent distortion or sagging thereof.

U. S. Patents Nos. 4,158,688 and 4,158,689 describe binder formulations comprising block copolymers of specified composition as the principal binder components and added oils and/or waxes to serve as plasticizers. The block copolymers may comprise elastomeric materials, i.e., synthetic rubber components, but the plasticizing oil and wax additives are identified as naphthenic, paraffinic or mixed naphthenic/paraffinic oils or waxes.

While the above and other prior art patents show significant advances in the capability of the art to form complex ceramic products by casting, molding, extrusion or other forming processes, further improvements in this capability are always desirable.

Particularly advantageous would be a binder formulation imparting the characteristic of extensibility to the compounded batch material, i.e., the capability of being extended or stretched without fractural failure of the plastic material. Forming processes requiring extensibility of the batch material during forming are known, but such processes have not been traditionally used for forming ceramic compositions because the required properties were felt to be unattainable with the highly filled compositions generally employed.

Also desirable would be binder compositions exhibiting improved dewaxing or debindering behavior, such that the removal of waxes or other binder constituents from the shaped part could be carried out rapidly without risk of slumping or cracking of the formed part. Particular advantages are realized if lower melt viscosities and lower dewaxing temperatures can be employed.

It is therefore a principal object of the present invention to provide novel binder formulations for powder forming processes and particularly for the manufacture of ceramic parts or products from powdered ceramic materials.

It is a further object of the invention to provide novel thermoplastic binder formulations which can be used to formulate ceramic batches exhibiting sufficient extensibility, at semi-molten binder temperatures, to be compatible with thermo-forming, blow molding and other plastic forming processes.

It is a further object of the invention to provide thermoplastic binder formulations for powder forming which impart sufficient extensibility to the batch to permit cross-sectional area reductions by drawdown of the shaped batch, as for example by draw-down of the extrudate in an extrusion process.

It is a further object of the invention to provide novel thermoplastic binder formulations which can be used to make powder batches comprising sinterable inorganic powders and offering a rapid transition on cooling to a tack-free state, even while retaining molten wax constituents therein.

It is a further object of the invention to provide novel thermoplastic binder formulations which provide green ceramic or other powder-formed parts offering improved dewaxing behavior with reduced part distortion or slumping.

It is a further object of the invention to provide novel ceramic or other powder batches of high solids content and improved methods for compounding them.

It is a further object of the invention to provide novel ceramic batches for the manufacture of ceramic parts or products, which batches exhibit improved batch flow and dewaxing behavior.

Other objects and advantages of the invention will become apparent from the following description thereof.

Summary of the Invention

The above and other objects of the invention are attained through the use of a new thermoplastic organic binder composition exhibiting, and imparting to a ceramic or other powder batch the characteristic of reversible gelling behavior.

The essential features of the invention are the subject-matter of independant claims 1, 9 and 10; preferred features are the subject-matter of dependant claims 2-8, 11-15.

More specifically characterizing the behavior of the inventive binders, as the temperature of the binder decreases from the binder melt temperature, a temperature called the upper gel formation temperature is reached at which linkages between the polymer molecules begin to form. As the temperature continues to decrease, additional linkages form and the effective molecular weight of the polymer increases towards infinity. Finally, as the temperature continues to decrease, the wax solidification temperature is reached and the binder and batch comprising it become solid.

In upper portion of the temperature range between the upper gel formation temperature and the wax solidification temperature, the binder and the powder batch comprising it can exhibit considerable extensional flow characteristics. In fact, for some highly flexible backbone polymers, the ceramic batch remains flexible even after the gel is completely formed as a 3-dimensional network, although in this region batch extensibility is often much reduced.

The gel which forms in these binders during the cooling process is reversible by the application of heat, such heat being effective to break down the gel linkages formed in the binder on cooling. Also, depending on the particular polymers and waxes employed, the application of shear to the binder or batch can also promote the breaking down of the gel structure.

In the process of reheating, the melting of the wax matrix will precede the breakdown temperature of the polymer gel, i.e., the gel breakdown temperature will exceed the wax melting temperature. In fact, in some systems, the gel breakdown temperature on heating can significantly exceed the gel formation temperature on cooling. High gel breakdown temperatures are a significant benefit in these binder systems, in that formed parts comprising the binders exhibit strong shape retention even at temperatures well above the melting and volatilization temperatures of the low-melting waxes. Thus the waxes are more readily removed from ceramic parts by fast dewaxing procedures, while the gels impart high resistance to part cracking, slumping or distortion during the early stages of binder burnout.

Although the binders of the invention offer substantial advantages in conventional forming processes such as molding and extrusion, their most unique processing advantage is that of imparting extensional flow characteristics to powder batches. Particularly evident in the processing of ceramic powder batch materials, these extensional flow characteristics permit the use of sheet reforming processes such as vacuum or pressure thermoforming, blow molding, and other techniques which have previously been used for glass and plastic forming but rarely if ever for ceramic or other powder forming processes.

Further, even in conventional ceramic forming processes such as extrusion, the unique extensional flow characteristics imparted by the binder systems of the invention enable the batch material to perform in ways not attainable with conventional batch formulations. For example, extrudate diameter reductions of 20 to 1 have been obtained by direct draw-down of extruded batches comprising the binders of the invention, with full retention of complex structural features of the original extrudate.

In all of the aforementioned processes, whether requiring extensional flow or otherwise, the binders of the present invention offer novel and important performance advantages including, but not being limited to: rapid transition from relatively low melt viscosity to a high-viscosity, tack-free state on cooling; good flexibility below the binder solidification or "set" temperature; rapid dewaxing at low temperatures without slump; and the ability to achieve high ceramic powder loadings (typically 50-75% by volume) while still exhibiting good processing characteristics.

4

High powder loadings are achieved in accordance with the invention through the use of an improved process for compounding thermoplastic powder batches comprising thermoplastic binders. In accordance with that method, the selected sinterable ceramic or other inorganic powder is first combined with a powder dispersant and a solvent for the dispersant to provide a powder slurry. In a separate container and separate mixing step, the thermoplastic polymer selected for incorporation in the binder is combined with a selected low-melting wax component at a temperature above the melting temperature of the wax, in order to provide a wax/polymer mixture comprising a uniform solution or dispersion of the polymer in the molten wax.

The powder slurry is next combined with the wax/polymer mixture and the combination is mixed together at a temperature above the melting temperature of the wax. Mixing is continued for a time at least sufficient to provide a homogeneous dispersion of the powder in the binder mixture, and will be sufficient to evaporate as much as possible the solvent component from the slurry. We have found that, through the incorporation of the powder component as a slurry rather than as a dry mill addition, higher loadings of the powder in the binder can be achieved.

Detailed Description

The present invention is not restricted to ceramic batch formulations but has general application to powder forming processes, i.e., to the forming of products or preforms for products from essentially any particulate sinterable inorganic material which is available in or convertible to a finely divided form. Examples of powder formed materials known to the art are particulate ceramics, including crystalline ceramic materials, glasses in particulate form, and crystallizable glasses (glass-ceramics), as well as powdered metals and sinterable non-oxide materials such as inorganic nitrides, carbides, and borides. Thus while the following description principally describes the processing of glass and ceramic batches comprising the thermoplastic gel binders of the invention, such descriptions are illustrative only and the invention is not deemed to be limited thereto.

As previously disclosed, the capability of exhibiting the properties of a reversible gel is a critical feature of the thermoplastic binders of the present invention. Polymer gels have been characterized as three-dimensional networks of flexible chains cross-linked by chemical or physical bonds. Such gels are generally classified into two types: reversible gels and irreversible gels.

In irreversible gels the polymer networks are formed by reacting one or more polymeric species in a non-reacting dispersing medium to provide covalent bonding among polymer species. The cross-links thus formed are not readily broken and reformed; therefore the gel is considered irreversible.

In reversible gels, on the other hand, cross-links are formed which can be easily reversed through physical means such as shearing or heat. The cross-links can be entwined helical chains, microcrystallites, or associations of segments of one copolymer chain with the segments of another chain. Such associations can occur either through hydrogen bonding between polar groups or through the association of similar block segments from each chain due to the thermodynamic incompatibility of the different block segment types in each chain. In the latter case, although the polymer may be miscible or soluble in the molten binder mixture, portions of the polymer chain may become poorly dissolved in the melt as the temperature declines. However, because these portions show good solubility for one another, they can associate into regions which form thermally reversible cross-links and a gel structure. Polymer-wax systems of this type are known which exhibit excellent gelling behavior and binder performance in accordance with the invention, as hereinafter more fully described.

The unique reversible gelling properties of the binders of the invention require that both the polymer components and the wax components be carefully selected. The polymer component must comprise a polymer which is soluble in or miscible with the selected molten wax, and which upon cooling of the polymer-wax mixture will form a reversible gel structure therein at a temperature above the solidification temperature of the wax. The wax, on the other hand, must provide a good solvent or compatible vehicle for the polymer and should exhibit melting and significant volatilization at some temperature which is below the gel breakdown temperature of the binder.

The gel breakdown temperature of the binder is that temperature at which, upon heating, the cross-linked gel structure is disrupted and the binder becomes a flowable liquid. The gel breakdown temperature of any particular binder formulation is manifested by the onset of viscous flow in the binder upon heating, and can be measured by standard methods such as the ring-and-ball softening point test (ASTM Test Designation E28-67).

An important characteristic of some reversible gel binders is that of being shear inhibited. A shear inhibited gel or batch retains a relatively high level of fluidity while in shear, and this characteristic can accordingly facilitate ceramic part forming in processes involving batch shear and requiring fluid batch formulations. Further, after part forming is complete and shear terminates, the shear inhibited binder can rapidly gel and become semisolid. Thus it quickly provides support for the formed part at the conclusion of the forming operation.

Gel binders exhibiting gelling temperatures on cooling which are relatively low compared to their gel breakdown temperatures on heating offer a further processing advantage. After heating and/or shearing of the batch to achieve gel breakdown in preparation for forming, the batch can be formed at relatively low temperatures without risk of regelling during the forming operation. Further, once the formed part has cooled and regelled, temperatures significantly higher than the part forming temperature can be used without part distortion, and thus higher dewaxing temperatures can be used earlier in the dewaxing cycle than would otherwise be possible.

The advantageous debindering behavior of powder batches comprising these thermoplastic gel binders is due in part to the high mobility of the molten low-melting waxes therein, such that wax diffusion and vaporization appear to be unaffected by the presence of the residual polymer gel network. In addition, the strength provided by the three-dimensional gel structure in a shaped green body minimizes the formation of stress cracks and other defects during dewaxing, and improves the resistance of the part to flow or slumping during the dewaxing cycle.

Finally, as previously suggested, certain of the reversible gel binders of the invention provide ceramic batches which exhibit excellent extensional flow characteristics in the gelled state at temperatures below the original batch processing temperature but above the wax melting temperature. Ceramic batches exhibit this characteristic of extensibility can be initially formed e.g., into green sheet at high temperatures and then cooled. Thereafter, the sheet can be reheated to a working temperature in the gel or so-called "reforming" range and reshaped by the application of pressure into any of a wide variety of preform shapes.

The reforming range is defined for the present purpose as that range of temperatures above the wax melting temperature but below the temperature of complete gel breakdown in the material. At these temperatures, due to the surprising extensibility of the reheated batch material, reforming can be carried out utilizing processes requiring a high degree of extensional flow, such as vacuum forming, blow molding or the like, which have had no practical application to ceramic forming in the prior art. The amount of extensional flow exhibited by any particular batch will depend not only upon the binder composition, but also upon the composition of the powder present in the batch.

In some batches incorporating the binder systems of the invention, behavior approaching elastic recovery or shape relaxation in reformed products has been observed. While useful for some applications, any undesired shape relaxation in the shaped batch material can readily be avoided simply by cooling formed shapes against their shaping surfaces to a temperature below the crystallization temperature of the wax. Following such cooling, later elastic recovery causing shape relaxation, for example as the reformed part is later heated for dewaxing, has not proven to be a problem.

Advantageously, the binders of the invention can be used in ceramic batches wherein the loading of ceramic powder material is relatively high. Batches wherein the binder constitutes as little as 25-30% by volume of the total batch can be used for processes such as extrusion or injection molding, although binder concentrations of 30-40% by volume will be more typical for most powder forming applications. Of course, where particular advantage of the desirable extensional or melt-flow characteristics of the binder is to be taken, binder loadings of 60% by volume or more may be employed.

As previously noted, the composition of the binder must be carefully controlled if desirable gelling characteristics are to be developed in the ceramic batch. Preferred binder systems operable in the present invention are formulations consisting essentially, in weight percent, of about 30-80% of at least one low-melting volatile wax, e.g., a fatty alcohol wax, 1-40% of at least one high molecular weight organic polymer, 0-20% total of modifying waxes, such as Carnauba wax, and 0-15% total of dispersants, lubricants, release agents and other functional additives having known utility in ceramic batches for molding or extrusion.

Referring in more detail to the above binder components, the low melting point, volatile waxes are generally characterizable as fatty alcohol, fatty acid, fatty glycol, and fatty glyceride waxes, i.e., waxes comprising these compounds or esters thereof, which are crystalline solids at room temperature and have melting points not exceeding about 80 °C. Low molecular weight paraffinic waxes may also be used, although they exhibit somewhat lower volatility than the non-paraffinic waxes mentioned.

The preferred waxes, which principally comprise wax molecules of 14-20 carbon atoms and most preferably consist of 14-18 carbon fatty alcohol waxes, exhibit relatively rapid volatilization at temperatures above about 140 °C at standard pressure and even more rapid volatilization under vacuum. Although other crystalline, low melting organic materials of high volatility could function as solvents in these systems, they generally do not have the requisite low toxicity and gel compatibility for use as a stable binder material for the compounding and molding of ceramic batches in accordance with the invention.

6

The high molecular weight polymer component imparting gelling properties to the binder may be essentially any wax-soluble or wax-miscible polymer which will form a gel in the selected low-melting wax. Polymers from a wide variety of different polymer systems have been shown to be compatible with molten waxes and to provide good gelling properties in wax solution. Representative of such diverse polymers are crystalline polymers such as ultrahigh molecular weight polyethylene (UHMWPE), polyethylene/acrylic acid copolymers, butyl methacrylate/acrylic acid copolymers, and thermoplastic block copolymer elastomers such as styrene tri-block copolymers.

The selection of the high molecular weight polymer to be used in formulating the binder system is governed primarily by the solubility or miscibility of the selected polymer in the molten wax solution and the gelling characteristics thereof as the wax is cooled. Secondary selection conditions include the extensional behavior of the polymer in the gel or working range of the binder, the effect of the polymer on the green strength of the molded part, and the mold release characteristics associated with the use of the polymer.

Each of these properties, including the gelling characteristics of the polymers in wax solution, may readily be determined by routine experiment. A dispersion of the candidate polymer in a suitable low-melting wax such as a synthetic octadecanol wax is prepared and the solubility or miscibility of the polymer in the wax is determined. The wax solution of dispersion is then cooled and the presence or absence of gelling is noted. Examples of polymers evaluated in this way which have demonstrated poor wax compatibility and/or non-gelling behavior include certain polyester copolymers, thermoplastic polyolefins, and thermoplastic polyurethanes.

The particularly preferred polymers for the formulation of thermoplastic binders in accordance with the present invention are the tri-block styrene-ethylene/butylene-styrene copolymers. These elastomeric copolymers, commercially available under the trade-name Kraton[R] from the Shell Chemical Company of Houston, Texas, form exceptionally strong gels in wax solution. Gelation of these polymers in wax solution is considered to be by association of the styrene endblocks, due to their thermodynamic incompatibility with the rubber midblock in the polymer.

As opposed, for example, to styrene di-block copolymers, these tri-block copolymers have an effective functionality greater than 2, and thus readily form the strong three-dimensional gel structure desired for good reforming and dewaxing behavior in accordance with the invention. The di-block styrene copolymer elastomers, on the other hand, are known to include polymer species demonstrating an inability to gel in wax-based binder systems.

Among the crystalline polymers exhibiting good gelling performance for thermoplastic binders, ultra-high molecular weight polymers are preferred. For hydrogen bonding polymers, polymer types comprising four or more reactive (hydrogen bond forming) functional groups per molecule are preferred.

As previously indicated, the binder formulation may include optional organic additives, polymeric or otherwise, which are effective to reinforce or strengthen the high molecular weight polymer gel. Particularly desirable are additives which can increase the gel breakdown temperature of the binder. For example, certain high glass transition temperature ($T_g$) polystyrene resins can be added to gels incorporating tri-block polystyrene copolymer elastomers to increase the $T_g$ of the styrene domains, and hence the breakdown temperature of these gels.

Hydrogen-bonded gels may also contain strengthening additives, strengthening in this case resulting from bridging between bonding sites on adjacent chains. Also in hydrogen bonded gels, ceramic fillers can play a significant role in gel formation; such gels are often much more pronounced and stable in the filled compounded batch than in the organic binder composition alone.

Modifying waxes may be particularly desirable additives in the gel binders of the invention, either to alter binder physical properties such as hardness, strength, or flexibility or to modify the flow or mold release characteristics of the binder system. Utilizing appropriate modifying waxes, binder formulations varying from extremely flexible at room temperature to hard and rigid at room temperature can be provided. In cases where particularly high flexibility is desired, a plasticizer may also be included in the binder formulation.

Carnauba wax is an example of a modifying wax useful to control the hardness of the binder, while oxidized polyethylene waxes offer improvements in mold release characteristics. Of course, other natural or synthetic waxes of similar character may additionally or alternatively be employed.

Added dispersants can have a substantial effect on the rheology of the binder and resulting ceramic batch. The use of appropriate dispersants allows for very high inorganic solids loadings in the ceramic batches, which loadings would be difficult to achieve without the use of any dispersants in the binder system. Thus, in adequately dispersed systems, powder loadings as high as 60-70% by volume are readily achieved, even in batches incorporating ceramic powders with average particle sizes in the one micron range.

Particularly in the case of batches for ceramic part forming, it is considered that residual carbon, remaining after the removal of binders from the batch material, is detrimental to the development of desirable ceramic microstructure in the final product. It is therefore important that all of the organic constituents of the binder have excellent burn-out properties, such that there will be minimal or no potential for forming carbon during the binder removal process. The binder formulations of the present invention, and especially the major wax and high molecular weight polymer components thereof, generally exhibit excellent burnout behavior.

Ceramic batches comprising thermoplastic gel binders in accordance with the invention may be compounded by simply combining the selected ceramic powder with a premixed binder in accordance with conventional procedures for using hot melt binders. However, the method preferred for thermoplastic batch preparation in accordance with the invention involves a preliminary powder processing step. In this step, the selected ceramic powders for the batch are first pre-milled with any desired dispersant and a solvent for the dispersant in a ball mill jar, to thoroughly coat the powder with the dispersant.

In a separate mixing step, the selected high molecular weight thermoplastic polymer or polymers are dissolved or dispersed in the wax components of the binder in a heated planetary mixer. The mixer is operated at a temperature above the melting temperature of the low melting waxes, and after the polymers have been dissolved or dispersed in these waxes other additives such as modifying waxes or the like are introduced and dissolved.

The particulate ceramic material and dispersant are then added to the molten wax/polymer mixture in the planetary mixer, and hot mixing is continued until complete blending of the ceramic and binder components, and subsequently complete volatilization of the solvent used for applying the dispersant to the ceramic powder, are achieved. If further mixing after solvent removal is desired, closed pressurized mixing equipment can be used to avoid the loss of the more volatile wax or other batch components.

Completion of the mixing process through solvent removal typically produces a thermoplastic paste exhibiting good fluidity or plasticity for molding or other forming process when heated and sufficient strength when cooled to allow for easy handling of the batch, or of a ceramic part or preform provided therefrom.

Final mixing of ceramic batches incorporating preferred thermoplastic gel binders such as hereinafter described is typically carried out at temperatures in the range of about 120-180 °C, with subsequent molding of the batch normally being carried out at a batch temperatures in the range of about 80-180 °C. Of course, higher or lower mixing or forming temperatures may be utilized for special applications.

As previously indicated, the forming of these batches may be carried out employing a number of different processes, including but not being limited to extrusion, injection molding, and vacuum forming. Injection molding is a particularly demanding process for ceramic part forming in terms of required batch and binder properties. The literature suggests that batch viscosities at the batch processing temperature should be below about 10,000 poises at shear rates in the range of 100-1000 sec $^{-1}$, these shear rates being typical for injection molding processes. Additionally, the binder must be formulated for easy release from the mold cavity once the part has been formed.

Table I below sets forth illustrative examples of ceramic batches comprising thermoplastic reversible gel binders in accordance with the invention which are particularly well suited for forming by injection molding processes. The ceramic powders selected for processing in Table I are zirconia ($ZrO_2$) powders, and the proportions of powders present are reported in parts by weight of the batch. Also reported in Table I are the components utilized in formulating the thermoplastic binders present in the batches, with the proportions of binder components also being reported in parts by weight. Finally, the identity and commercial source for some of the specific binder components are shown.

## TABLE I

| | 1 | 2 | 3 | 4 |
|---|---|---|---|---|
| **Ceramic Powder (pbw)** | | | | |
| Zircoa 5027 Zirconia | 1037 | 1037 | - | - |
| Zircoa A-grain Zirconia | - | - | 1066 | 1237 |
| Total Solids (pbw) | 1037 | 1037 | 1066 | 1237 |
| **Binder Components (pbw)** | | | | |
| [a] styrene-ethylene/butylene-styrene tri-block copolymer | 28.9 | - | - | 35 |
| [b] acid functional butyl methacrylate copolymer | - | - | 40 | - |
| [c] ultra high molecular weight polyethylene | - | 3.9 | - | - |
| [d] fatty alcohol wax 1 | 33.6 | 46.2 | 29 | 32 |
| [e] fatty alcohol wax 2 | 22.1 | 30.0 | 19 | 21 |
| [f] Carnauba wax | 11.9 | 16.4 | - | - |
| [g] oxidized polyethylene wax 1 | - | - | 12 | - |
| [h] oxidized polyethylene wax 2 | - | - | - | 12 |
| [i] dispersant | 3.5 | 3.5 | 2.28 | 2.47 |
| Total Binder (pbw) | 104 | 80 | 102.28 | 102.47 |
| Volume % Solids | 67% | 67% | 68% | 66% |

**Components Key**

| | |
|---|---|
| a=Kraton[R] G1650 elastomer | Shell Chemical Company |
| b=Neocryl[R] B723 copolymer | ICI Americas, Inc. |
| c=HiFax[R] 1900 polyethylene | Himont |
| d=octadecanol wax | Conoco Inc. |
| e=hexadecanol wax | Conoco Inc. |
| f=Carnauba wax | Ross Chemical Co. |
| g=AC-6702/AC-330 wax blend | Allied Corp. |
| h=AC-656 wax | Allied Corp. |
| i=Hypermer[R] KD-3 dispersant | ICI Americas, Inc. |

Compositions 3 and 4 from Table I demonstrate the particularly preferred binder formulations for the injection molding of ceramic parts. These formulations exhibit viscosities well below the 10,000 poise level needed for good injection molding performance, and demonstrate excellent mold release behavior due to the inclusion of the optional oxidized polyethylene wax additives as mold release aids.

Additional formulations for ceramic batches provided in accordance with the invention are reported in Tables II and III below. The formulations in Tables II and III exhibit rheologies which are particularly well suited for extrusion processing. Moreover, the compositions in Table II provide exceptionally good extensional flow in the batch reforming region, such that they can provide extruded or otherwise processed green ceramic sheet which is highly amenable to thermoforming after extrusion.

Batch compositions in Tables II and III are reported in parts by weight, and except where otherwise noted the batch components employed are the commercially available materials set forth in the Components Key section of Table I above. The powdered glass utilized in the Table II formulation is a sodium aluminosilicate glass commercially available as Code 0317 glass from Corning Incorporated.

Table II

| Ceramic/Glass Powder (pbw) | 1 | 2 | 3 |
|---|---|---|---|
| Zircoa 5027 Zirconia | 1359 | 1178 | - |
| Silicate Glass | - | - | 612 |
| Total Solids (pbw) | 1359 | 1178 | 612 |
| Binder Components (pbw) | | | |
| Kraton$^R$ G1650 elastomer | 30 | - | 30 |
| Neocryl$^R$ B723 polymer | - | 30 | - |
| octadecanol wax | 35 | 32 | 35 |
| hexadecanol wax | 22.65 | 20 | 22.65 |
| Carnauba wax | 12.35 | 18 | 12.35 |
| Hypermer$^R$ KD-3 dispersant | 8.75 | 7.66 | - |
| [j]Dispersant 2 | - | - | 2.0 |
| Total Binder (pbw) | 108.75 | 107.66 | 102 |
| Volume % Solids | 68% | 66% | 68% |

j = Emphos™ PS-21A surfactant, Witco Chemical Corp.

Table III

| Ceramic Powder (pbw) | 1 | 2 |
|---|---|---|
| Zircoa 5027 Zirconia | 1005 | 1037 |
| Total Solids (pbw) | 1005 | 1037 |
| Binder Components (pbw) | | |
| [k]ethylene/acrylic acid copolymer | 20 | - |
| Kraton$^R$ G1650 elastomer | - | 35 |
| Octadecanol wax | 40.01 | 32 |
| Hexadecanol wax | 25.88 | 21 |
| Carnauba wax | 14.11 | 12 |
| Hypermer$^R$ KD-3 dispersant | 7.65 | 3.5 |
| Total Binder (pbw) | 107.65 | 104 |
| Volume % Solids | 61% | 67% |

k = Primacor$^R$ 3340 acrylic acid copolymer, Dow Chemical Co.

As will readily be apparent to those skilled in the art, the slump resistance exhibited by a shaped ceramic or other green powder preform during the course of the dewaxing (debindering) procedure is critical to the commercial success of the manufacturing process. The principal challenge in formulating thermoplastic binders for ceramic powders is to simultaneously provide low forming viscosities and high dewaxing slump resistance in a single batch formulation.

Many currently wax-based thermoplastic binders overcome this dilemma by using multi-phase binder systems in which one phase can be solvent-extracted prior to the high-temperature dewaxing step. Other approaches have involved multi-phase wax binders wherein the early volatilization of a low-melting wax phase develops enhanced slump resistance for subsequent high-temperature debindering.

In the binders of the present invention, the retention of the three-dimensional gel structure through the preliminary stages of low-melting wax volatilization generally provides excellent resistance to slumping during the dewaxing cycle. Gel retention is achieved by heating green ceramic parts of the desired configuration to a temperature in a range somewhat above the melting point of the most volatile wax employed in the binder, but below the thermal breakdown temperature of the gel. Heating in this temperature is generally continued for a time sufficient to achieve a level of wax volatilization such that the green shape becomes highly resistant to slumping when heated above the gel breakdown temperature of the binder.

The heating time and proportion of wax removal required to reach this state will vary depending upon the configuration of the part and the precise binder formulation utilized in the batch, but can readily be determined by routine experiment. If accelerated wax volatilization is necessary or desired, vacuum heating systems can be employed to shorten the time needed for preliminary wax vaporization.

Preferred dewaxing procedures for ceramic parts formed from the batch formulations of Tables I-III above generally comprise at least the following stages: (a) slow heating (e.g., 15 °C per hour or less) to the lower limit of the low-melting wax volatilization range (about 110 °C), (b) slow heating or long dwell periods in the temperature range of relatively rapid low-melting wax volatilization (e.g., 4-20 hours at temperatures in the range of about 110-165 °C), and (c) relatively slow heating or long dwell periods at temperatures in the upper temperature range for dewaxing (e.g., 10-40 hours at temperatures in the range of about 165-230 °C).

While the invention places principal reliance on the polymer gel structure to provide the slump resistance required for efficient dewaxing, practical considerations relating to the need for rapid dewaxing may in some cases dictate that the rheological characteristics of the batch will play a significant supporting role. For example, commercial expedience may sometimes require that the gel breakdown temperature of the binder be exceeded while there is still considerable wax contained in the green ceramic body.

Under this condition it is desirable that the batch exhibit rheological characteristics which include a yield stress and/or pseudoplastic behavior. Advantageously, the gel-forming polymers employed in the present invention have been found to impart a high degree of pseudoplasticity to the batch, and many of the hydrogen-bonded polymers provide batches exhibiting good yield. These features, although perhaps of secondary importance for many manufacturing operations, may still impart a significant advantage in selected binder formulations for specialized commercial processes.

While the invention has been particularly described above with respect to specific materials and specific procedures, it will be recognized that those materials and procedures are presented for purposes of illustration only and are not intended to be limiting.

## Claims

1. A composition for a thermoplastic organic binder comprising an organic polymer dissolved or dispersed in a wax, characterized in that:

   the wax is a low-melting wax comprising one or more compounds selected from the group consisting of fatty alcohols, fatty acids, fatty glycols, fatty glycerides, and esters thereof which are crystalline solids at room temperature;

   the organic polymer is selected from the group consisting of ultrahigh molecular weight polyethylene, polyethylene/acrylic acid copolymers, butyl methacrylate/acrylic acid copolymers, and styrene tri-block copolymers, and

   the polymer forms a reversible gel in the wax as the composition is cooled from a melt.

2. A composition in accordance with claim 1 wherein the wax is a low-melting wax having a melting temperature not exceeding about 80 °C.

3. A composition in accordance with claim 1 or claim 2 wherein the low-melting wax is a fatty alcohol wax comprising molecules of 14-20 carbon atoms.

4. A composition in accordance with any one of claims 1 to 3 wherein the organic polymer is an elastomeric styrene tri-block copolymer comprising styrene endblocks and an ethylene/butylene midblock.

5. A composition in accordance with any one of claims 1 to 4 consisting essentially, in weight percent, of about 30-80% of the low-melting wax, 1-40% of the organic polymer, 0-20% total of modifying waxes, and 0-15% total of functional binder additives selected from the group consisting of particle dispersants, lubricants, and mold release agents.

6. A composition in accordance with any one of claims 1 to 5 wherein the reversible gel has a thermal breakdown temperature which is above the melting temperature of the wax.

7. A composition in accordance with any one of claims 1 to 6 wherein the thermal breakdown temperature of the gel is at least 20°C above the melting temperature of the wax.

8. A composition in accordance with any one of claims 1 to 7 wherein the reversible gel is shear inhibited.

9. Use of a composition in accordance with any one of claims 1 to 8 as a thermoplastic organic binder in a moldable thermoplastic powder batch wherein the powder batch comprises a powder component consisting of a sinterable inorganic particulate material.

10. A method for making a shaped article which comprises the steps of mixing a sinterable inorganic powder with a composition as claimed in any of claims 1 to 8 to form a thermoplastic powder batch, shaping the thermoplastic powder batch into a green shaped article, and heating the green shaped article to remove the composition therefrom.

11. A method as claimed in claim 10 wherein the sinterable inorganic powder is a ceramic powder.

12. A method in accordance with claim 10 or 11 wherein the step of heating the green ceramic article to remove the composition therefrom comprises the step of heating the article at a temperature above the melting temperature of the low-melting wax but below the thermal breakdown temperature of the gel for a time at least sufficient to substantially reduce the concentration of the low-melting wax in the article.

13. A method in accordance with claim 11 or claim 12 wherein the green shaped article is a green ceramic sheet.

14. A method in accordance with claim 13 wherein, prior to the step of removing the composition from the green ceramic sheet, the sheet is reformed into a selected configuration for the shaped ceramic article by the application of pressure to the sheet while maintaining the sheet at a temperature below the thermal breakdown temperature of the reversible gel.

15. A method as claimed in any one of claims 10 to 14 wherein the mixing step comprises the steps of:
combining the sinterable inorganic powder with a dispersant for the powder and a solvent for the dispersant to provide a flowable powder slurry;
combining the thermoplastic polymer with the low-melting wax at a temperature above the melting temperature of the wax to provide a wax/polymer mixture comprising a solution or dispersion of the polymer in the molten wax;
combining the powder slurry with the wax/polymer mixture; and
mixing the powder slurry and wax/polymer mixture together at a temperature above the melting temperature of the wax for a time sufficient to provide a uniform dispersion of the powder in the wax/polymer mixture and to evaporate the solvent for the dispersant from the uniform dispersion.

**Patentansprüche**

1. Zusammensetzung für ein thermoplastisches organisches Bindemittel, die ein in einem Wachs aufgelöstes oder dispergiertes organisches Polymer aufweist,
**dadurch gekennzeichnet**,
daß:
das Wachs ein niedrigschmelzendes Wachs ist, das eine oder mehrere Verbindungen umfaßt, ausgewählt aus der Gruppe, bestehend aus Fettalkoholen, Fettsäuren, Fettglykolen, Fettglyceriden, und Estern hiervon, die bei Raumtemperatur kristalline Feststoffe sind;
das organische Polymer ausgewählt ist aus der Gruppe, bestehend aus ultrahochmolekularem bzw. ultrahochmolekularen Polyethylen, Polyethylen/Acrylsäure-Copolymeren, Butylmethacrylat/Acrylsäure-Copolymeren und Styrol-Tri-Blockcopolymeren, und
das Polymer im Wachs ein reversibles Gel ausbildet, wenn die Zusammensetzung aus einer Schmelze abgekühlt wird.

**2.** Zusammensetzung nach Anspruch 1, worin das Wachs ein niederschmelzendes Wachs mit einer Schmelztemperatur von nicht mehr als etwa 80 ° C ist.

**3.** Zusammensetzung nach Anspruch 1 oder 2, worin das niederschmelzende Wachs ein Fettalkoholwachs aus Molekülen mit 14 - 20 Kohlenstoffatomen ist.

**4.** Zusammensetzung nach einem der Ansprüche 1 bis 3, worin das organische Polymer ein elastomeres Styrol-Triblock-Copolymer ist, das Styrol-Endblocks und einen Ethylen/Butylen-Mittelblock aufweist.

**5.** Zusammensetzung nach einem der Ansprüche 1 bis 4, bestehend im wesentlichen, ausgedrückt in Gew.-%, aus etwa 30 - 80 % des niederschmelzenden Wachses, 1 - 40 % des organischen Polymers, insgesamt 0 - 20 % an modifizierenden Wachsen und insgesamt 0 - 15 % funktioneller Bindemitteladditive, ausgewählt aus der Gruppe, bestehend aus Teilchendispergiermitteln, Schmiermitteln und Formtrennmitteln.

**6.** Zusammensetzung nach einem der Ansprüche 1 bis 5, worin das reversible Gel eine Temperatur für den thermischen Abbau aufweist, die über der Schmelztemperatur des Wachses liegt.

**7.** Zusammensetzung nach einem der Ansprüche 1 bis 6, worin die Temperatur für den thermischen Abbau des Gels wenigstens 20 ° C über der Schmelztemperatur des Wachses liegt.

**8.** Zusammensetzung nach einem der Ansprüche 1 bis 7, worin das reversible Gel schergehemmt ist.

**9.** Verwendung einer Zusammensetzung nach einem der Ansprüche 1 bis 8 als thermoplastisches organisches Bindemittel in einem formbaren thermoplastischen pulverförmigen Ansatz, worin der pulverförmige Ansatz einen pulverförmigen Anteil aufweist, der aus einem sinterfähigen anorganischen teilchenförmigen Material besteht.

**10.** Verfahren zur Herstellung eines geformten Gegenstandes, welches das Vermischen eines sinterfähigen anorganischen Pulvers mit einer Zusammensetzung nach einem der Ansprüche 1 bis 8 umfaßt, um einen thermoplastischen pulverförmigen Ansatz zu bilden, Formen des thermoplastischen pulverförmigen Ansatzes zu einem ungebrannten geformten Gegenstand und Erhitzen des ungebrannten geformten Gegenstandes, um die Zusammensetzung hieraus zu entfernen.

**11.** Verfahren nach Anspruch 10, worin das sinterfähige anorganische Pulver ein Keramikpulver ist.

**12.** Verfahren nach Anspruch 10 oder 11, worin der Erhitzungsschritt des ungebrannten Keramikgegenstandes zur Entfernung der Zusammensetzung hieraus das Erhitzen des Gegenstandes bei einer Temperatur über der Schmelztemperatur des niederschmelzenden Wachses, jedoch unterhalb der Temperatur für den thermischen Abbaus des Gels für eine Zeitdauer umfaßt, die wenigstens ausreichend ist, um die Konzentration des niederschmelzenden Wachses im Gegenstand wesentlich zu verringern.

**13.** Verfahren nach Anspruch 11 oder 12, worin der ungebrannte geformte Gegenstand eine ungebrannte Keramikschicht ist.

**14.** Verfahren nach Anspruch 13, worin, vor der Entfernung der Zusammensetzung aus der ungebrannten Keramikschicht, die Schicht zu einer ausgewählten Gestaltung für den geformten Keramikgegenstand durch Anwendung von Druck auf die Schicht regeformt wird, während die Schicht bei einer Temperatur unter der Wärmeabbautemperatur des reversiblen Gels gehalten wird.

**15.** Verfahren nach einem der Ansprüche 10 bis 14, worin der Mischschritt die nachfolgenden Schritte aufweist:
Kombinieren des sinterfähigen anorganischen Pulvers mit einem Dispergiermittel für das Pulver und einem Lösungsmittel für das Dispergiermittel, um eine fließfähige pulverförmige Aufschlämmung bereitzustellen;
Kombinieren des thermoplastischen Polymers mit dem niederschmelzenden Wachs bei einer Temperatur über dem Schmelzpunkt des Wachses, um eine Wachs/Polymermischung bereitzustellen, die eine Lösung oder eine Dispersion des Polymers im geschmolzenen Wachs aufweist;

Kombinieren der pulverförmigen Aufschlämmung mit der Wachs/Polymermischung; und

Zusammenmischen der pulverförmigen Aufschlämmung und der Wachs/Polymermischung bei einer Temperatur über der Schmelztemperatur des Wachses für eine Zeit, die ausreichend ist, um eine gleichmäßige Dispersion des Pulvers in der Wachs/Polymermischung bereitzustellen und das Lösungsmittel für das Dispergiermittel aus der gleichmäßigen Dispersion zu verdampfen.

**Revendications**

1. Une composition pour un liant organique thermoplastique comprenant un polymère organique dissous ou dispersé dans une cire, caractérisé en ce que :

la cire est une cire à bas point de fusion comprenant un ou plusieurs composés choisis dans le groupe formé par les alcools gras, les acides gras, les glycols gras, les glycérides gras et esters de ces composés qui sont des solides cristallins à la température ambiante ;

le polymère organique est choisi dans le groupe formé par le polyéthylène de poids moléculaire ultra-haut, les copolymères de polyéthylène/acide acrylique, les copolymères de methacrylate de butyle/acide acrylique et les copolymères de styrène triséquencés ; et

le polymère forme un gel réversible dans la cire lorsque l'on fait refroidir la composition en partant d'une masse fondue.

2. Une composition selon la revendication 1 dans laquelle la cire est une cire à bas point de fusion ayant une température de fusion ne dépassant pas 80 °C environ.

3. Une composition selon la revendication 1 ou la revendication 2 dans laquelle la cire à bas point de fusion est une cire d'alcool gras comprenant des molécules en $C_{14}$ à $C_{20}$.

4. Une composition selon l'une quelconque des revendications 1 à 3 dans laquelle le polymère organique est un copolymère élastomère de styrène triséquencé comprenant des séquences terminales de styrène et une séquence centrale d'éthylène/butylène.

5. Une composition selon l'une quelconque des revendications 1 à 4 constituée essentiellement, en proportions pondérales, d'environ 30 à 80 % de la cire à bas point de fusion, 1 à 40 % du polymère organique, 0 à 20 % au total de cires modifiantes, et 0 à 15 % au total d'additifs liants fonctionnels choisis dans le groupe formé par les agents dispersants de particules, les lubrifiants et les agents de démoulage.

6. Une composition selon l'une quelconque des revendications 1 à 5 dans laquelle le gel réversible présente une température de destruction thermique qui est supérieure à la température de fusion de la cire.

7. Une composition selon l'une quelconque des revendications 1 à 6 dans laquelle la température de destruction thermique du gel est supérieure d'au moins 20 °C à la température de fusion de la cire.

8. Une composition selon l'une quelconque des revendications 1 à 7 dans laquelle le gel réversible est inhibé par cisaillement.

9. Utilisation d'une composition selon l'une quelconque des revendications 1 à 8 comme liant organique thermoplastique dans une charge de poudre thermoplastique moulable dans laquelle la charge de poudre comprend un composant pulvérulent constitué d'une matière particulaire minérale frittable.

10. Un procédé pour la confection d'un article façonné qui comprend les opérations consistant à mélanger une poudre minérale frittable avec une composition selon l'une quelconque des revendications 1 à 8 pour former une charge de poudre thermoplastique, à façonner la charge de poudre thermoplastique en un article faconné cru, et à chauffer l'article façonné cru pour en éliminer la composition.

11. Un procédé selon la revendication 10 dans lequel la poudre minérale frittable est une poudre céramique.

**12.** Un procédé selon la revendication 10 ou 11 dans lequel l'opération de chauffage de l'article céramique cru pour en éliminer la composition comprend l'opération de chauffage de l'article à une température supérieure à la température de fusion de la cire à bas point de fusion mais inférieure à la température de destruction thermique du gel pendant un temps au moins suffisant pour réduire notablement la concentration de la cire à bas point de fusion dans l'article.

**13.** Un procédé selon la revendication 11 ou la revendication 12 dans lequel l'article façonné cru est une feuille céramique crue.

**14.** Un procédé selon la revendication 13 dans lequel, antérieurement à l'opération d'élimination de la composition de la feuille céramique crue, la feuille est refaçonnée pour conférer une configuration sélectionnée à l'article céramique façonné par application de pression à la feuille avec maintien concomitant de la feuille à une température inférieure à la température de destruction thermique du gel réversible.

**15.** Un procédé selon l'une quelconque des revendications 10 à 14 dans lequel l'opération de mélange comprend les opérations consistant :

à combiner la poudre minérale frittable avec un agent dispersant pour la poudre et un solvant pour l'agent dispersant à l'effet d'obtenir une barbotine de poudre pouvant s'écouler ;

à combiner le polymère thermoplastique avec la cire à bas point de fusion à une température supérieure à la température de fusion de la cire pour obtenir un mélange cire/polymère comprenant une solution ou une dispersion du polymère dans la cire fondue ;

à combiner la barbotine de poudre avec le mélange cire/polymère ; et

à mélanger entre eux la barbotine de poudre et le mélange cire/polymère à une température supérieure à la température de fusion de la cire pendant un temps suffisant pour obtenir une dispersion uniforme de la poudre dans le mélange cire/polymère et pour chasser de la dispersion uniforme le solvant de l'agent dispersant en l'évaporant.